# EUROPEAN PATENT APPLICATION

(11) **EP 1 209 511 A1**
(43) Date of publication of application: **29.05.2002**
(21) Application number: 00204176.2
(22) Date of filing: 24.11.2000
(51) Int. Cl.: G02F 1/1335, G02F 1/13357

(54) **Monochrome liquid crystal display device**

(71) Applicant: AGFA-GEVAERT, 2640 Mortsel (BE)
(72) Inventor: Vermeylen, Dirk c/o Agfa-Gevaert N.V., 2640 Mortsel (BE); Wouters,Paul, c/o Agfa-Gevaert N.V., 2640 Mortsel (BE)

(57) **Abstract**

A monochrome liquid crystal display device comprises a layer of liquid crystals (1) and a light source (6) arranged for uniformly illuminating the liquid crystal layer. A colour filter (8) is provided for changing the spectrum of the light emitted by the liquid crystal display device.

## Description

### FIELD OF THE INVENTION

The present invention relates to display devices. More specifically the invention relates to monochrome liquid crystal display devices for use in medical applications, such as radiographic diagnosis.

### BACKGROUND OF THE INVENTION

In radiographic diagnosis it has been common practice for very many years to use photographic film as a medium for recording a radiographic image. Diagnosis is performed by examining the image on the film when placed on a light box.

The film medium is being used for primary diagnosis as well as for communication between radiologist, physicians, doctors, patients and others. The film is furthermore used as an archiving medium.

Several film types have been used. A distinction between the different film types can be made on the basis of the inherent colour of the film base. One can distinguish between clear base film and blue base films.

Among radiologist so-called blue base film has become a standard. In order to obtain a blue base radiographic film a blue dye has been added to the substrate of the radiographic film. (see Technik der Röntgendiagnostik, Hanno Poppe, Georg Thieme Verlag, Stuttgart, 1961, p. 571). Blue base film is far more frequently used than clear base film, the use of which has become rather limited.

Although the technical reasons for the claimed advantages of blue base radiographic film are far from convincing, it is a fact that the blue colour of the film is considered an aid to diagnosis (see Radiographic processing, D.H.O. John, Focal Press London, page 238-239). Advantages of this so-called blue base film are described by radiologists as 'cleaner', 'less fatiguing', 'cold', 'sharper' and 'with more contrast perception'.

With the introduction of Picture Archiving and Communication Systems (PACS) and workstation based applications such as computed radiography (CR), magnetic resonance (MR), computed tomography (CT) etc. cathode ray tube (CRT) monitors have more and more been used as a replacement for film.

In order to be able to perform diagnosis of the image displayed on the monitor, specific monitors have been developed and introduced in this market in order to meet the high standards.

Typically, these monitors are high resolution monochrome (greyscale) monitors. Pixels are not formed by addressing a red, green and blue subpixel in various intensity combinations like it is done on colour monitors, but by directly writing with an electron beam on the CRT phosphor, without passing through a grid. In this way, higher resolutions can be obtained. However, a consequence is that in such a monitor only one type of phosphor is used to generate the light.

For medical applications, in most cases one of the following two phosphor types are currently being used in these monitors: the P104 and the P45 phosphor.

A P104 phosphor produces a light colour, which is very close to neutral white.

A P45 phosphor produces a more blue-like light. The P45 phosphor has been used to generate an overall image look that resembles the overall image look which the radiologist is used to have when he is diagnosing radiographic images on blue-base film.

One of the latest developments in the softcopy environment, is the use of flat panel displays on the basis of liquid crystals.

The development of the technology of greyscale flat panels is leading to an increased use of the medium for diagnostic and viewing applications. The more the quality of these products is improved, the more they will replace the currently used medical greyscale CRT monitors.

The technology of greyscale flat panel display devices is based on another principle than that of CRT monitors.

In these display devices chemical crystals are applied that within a given temperature range (-5°C - +65°C) act as anisotrope fluidum whereas above this temperature range they become a clear isotrope fluidum.

In the anistrope range the optical characteristics of these crystals can be changed by applying an electrical field.

In absence of this electrical field, the material is clear whereas at ca. 1 MV/m the material becomes turbid and does no longer transmit light.

The fact that these crystals may act as light valves for the light of an illuminating light source (occasional provided with a light diffuser) placed behind the layer of liquid crystals is used when building display devices by means of these so-called 'liquid crystals'.

A liquid crystal display device commonly consists of two spaced glass panels in between which a thin layer of liquid crystals is applied. The glass panels are usually covered with a transparent electrode layer which may be patterned in such a way that an array of pixels is created. By energising the electrodes the liquid crystal layer can be made locally turbid.

Two addressing systems are used to drive the display device: either a passive or an active system.

In the passive system the two electrode layers are patterned in a regular array of stripes. The stripes on one panel are perpendicular to those on the other panel.

The application of a voltage across two opposing stripes causes a change in the optical properties of the liquid crystal material situated at the crossing point of the two stripes, resulting in a change of light transmission through the energised pixels.

In an active system, which greatly improves the performance of the liquid crystal display device, each pixel has its own individual microelectronic switch. This means that such a microswitch is connected to an individual transparent pixel electrode, the planar size of which defines the size of the pixel. The microswitches are individually addressable. Three terminal or two-terminal switching elements exist. Three terminal switches are formed by thin film transistors arrayed in a matrix pattern on one glass platen which together with a glass platen carrying a transparent uniform (non-patterned) electrode layer forms a gap which is filed with the liquid crystal material. In case of a two-terminal switch such as a diode the second platen must also be patterned.

Monochrome as well as colour liquid crystal display devices exist.

To impart colour reproduction capability to the liquid crystal display device a colour filter array element is provided on one of the two glass platens. In an active matrix display device, the colour filter is usually provided on the glass platen not carrying the switching elements.

A colour filter array for full colour reproduction is composed of patches of three primary colours red, green and blue arranged in a given order. For contrast enhancement the colour patches may be separated by black contour line patterns delineating the individual colour filters.

In order to prevent loss of effective voltage over the liquid crystal material, the colour filter is preferably kept out of the electrical circuit, which means that the transparent electrode is deposited on top of the colour filter array element.

In medical diagnosis high resolution is extremely important. Another very important aspect is contrast.
Monochrome liquid crystal display devices provide increased luminance which results in increased contrast and are therefore preferred over colour liquid crystal display devices.

Another element which is very important to make medical diagnosis as reliable as possible is the consistency of the overall outlook of medical (radiographic) images.

A radiologist must be presented with images the overall outlook of which resembles as much as possible the outlook he is trained to see and is expected to see.

In this way it is avoided that his attention would be distracted by overall changed aspects of the image such as a different background colour of the image rather than by elements that are of real importance for the diagnosis.

However, the monochrome liquid crystal display devices presently on the market produce a grey shade that is clearbase like because of the spectrum of the light source that is used in such a monochrome liquid crystal display device.

Hence, the image that is displayed on a monochrome liquid crystal display devices does not correspond with the characteristics of the image which the radiologist is used to diagnose. It does not resemble the blue base radiographic film, nor does it resemble the image on a CRT monitor employing a P45 phosphor.

This fact is generally not appreciated by the radiologists.

### OBJECTS OF THE INVENTION

It is an object of the invention to provide a monochrome liquid crystal display device that is adapted for use in the field of medical diagnosis on displayed radiographic images.

Further object will become apparent from the description hereafter.

### SUMMARY OF THE INVENTION

The above mentioned objects are realised by a monochrome liquid crystal display device having the specific features defined in claim 1.

A monochrome liquid crystal display device according to the present invention comprises a liquid crystal panel comprising a layer (1) of liquid crystals and a light source (6) arranged for uniformly illuminating the layer (1) of liquid crystals. A colour filter (8) is provided for changing the spectrum of the light emitted by said liquid crystal panel.

Preferably the colour filter has a spectrum such that the colour co-ordinates of the light emitted by the liquid crystal display device correspond with the colour co-ordinates of the blue base of a photographic film.

In a specific embodiment the colour filter is the blue base of a photographic film.

The colour filter is preferably provided between the light source and a viewer. Different positions are possible.

Another aspect of the present invention relates to a method of calculating a filter for changing the spectrum of the light emitted by a monochrome liquid crystal display device.

The method comprises the following steps.

First the spectrum of the monochrome liquid crystal display device is measured without a filter being present and the colour co-ordinates in a predefined colour space such as 1931 CIE standard colour space, are calculated. The result is referred to as colour A.

Next, the spectrum of a blue base of a photographic film is measured on the same light-box. The colour co-ordinates in the same colour space are calculated. The result is referred to as colour B.

Next a filter is calculated having a spectrum C so that colour A applied with the filter C can be perceived by the human eye as colour B.

Specific features for preferred embodiments of the invention are set out in the dependent claims.

The display device of the present invention is advantageous because it provides an acceptable compromise between two requirements set by the radiologists, namely (1) the need for high contrast which is nowadays provided by monochrome liquid crystal display devices and (2) the need for a displayed image that maximally resembles the overall look of the images the radiologist has been used to see on either radiographic film or on a CRT display device.

Further advantages and embodiments of the present invention will become apparent from the following description [and drawings].

### BRIEF DESCRIPTION OF THE DRAWINGS

Fig. 1 shows an embodiment of a monochrome liquid crystal display device according to the present invention,
Fig. 2 shows the spectral response characteristic of an example of a colour filter,
Fig. 3 shows the spectrum of the light emitted by a prior art liquid crystal display device without filter,
Fig. 4 shows the spectrum of the light emitted by the same display device provided with a filter having the characteristics set out in figure 2,
Fig. 5 shows the re-scaled spectra of figures 3 and 4,
Fig. 6 shows the spectrum of a P45 phosphor,
Fig. 7 shows a CIE 1931 colour space and the position of some elements in that colour space that are relevant for the explanation of the present invention.

### DETAILED DESCRIPTION OF THE INVENTION

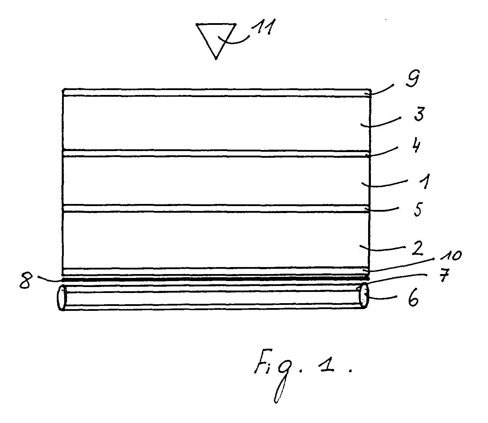

Figure 1 illustrates an embodiment of a liquid crystal display device according to the present invention. The display device comprises a liquid crystal panel comprising a layer of liquid crystals 1 between a first platen 2 and a second platen 3.

In order to enable addressing of individual pixels of the liquid crystal layer an electrode assembly comprising transparent electrode layers 4 and 5 can be provided.

Light polarising layers are indicated by numerals 9 and 10.

A light source 6 is arranged to illuminate the liquid crystal layer 1. In the embodiment shown the light is emitted by back light source 6. The emitted light is guided and diffused by a light diffuser 7. In an alternative embodiment reflection illumination can be provided.

According to the present invention a colour filter 8 is provided to modify the spectrum of the light transmitted by the liquid crystal panel. The colour filter is provided in the optical path between the light source 6 and a viewer 11. More specifically, in this embodiment the colour filter is provided in between the light source 6 and glass platen 2.

This embodiment is preferred because the viewing screen of the liquid crystal display device which is generally designed to absorb ambient light very well and hence to avoid reflections, is not affected by the provision of the filter.

Alternatively the colour filter is provided in front of glass platen 3 and polariser 9, e.g. in front of the viewing screen of the display device. This embodiment is advantageous in that existing display devices can be adapted according to the present invention without the need for opening the display device and modifying the internal construction of the device.

In a particular embodiment the colour filter consist of the blue base of a photographic film which is a thin blue coloured polyester film.

The film may be clamped to the housing of the display device, alternatively it may be adhered by colourless, transparent glue to the screen of the display device. Still alternative means of adhering the film to the display screen may be envisaged.

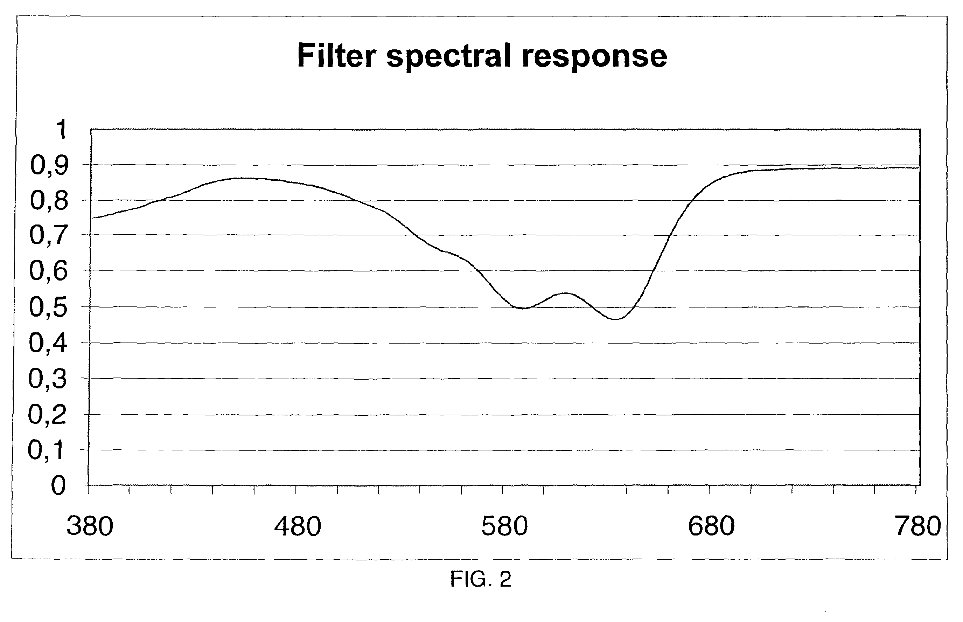

In figure 2 the spectrum of the light emitted by a display device was measured in absence of any colour filter.

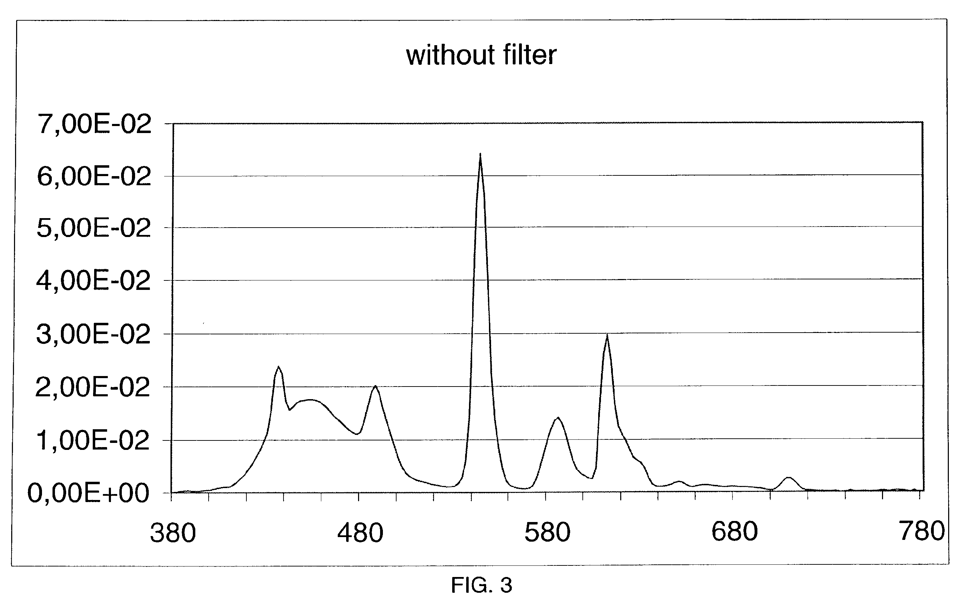

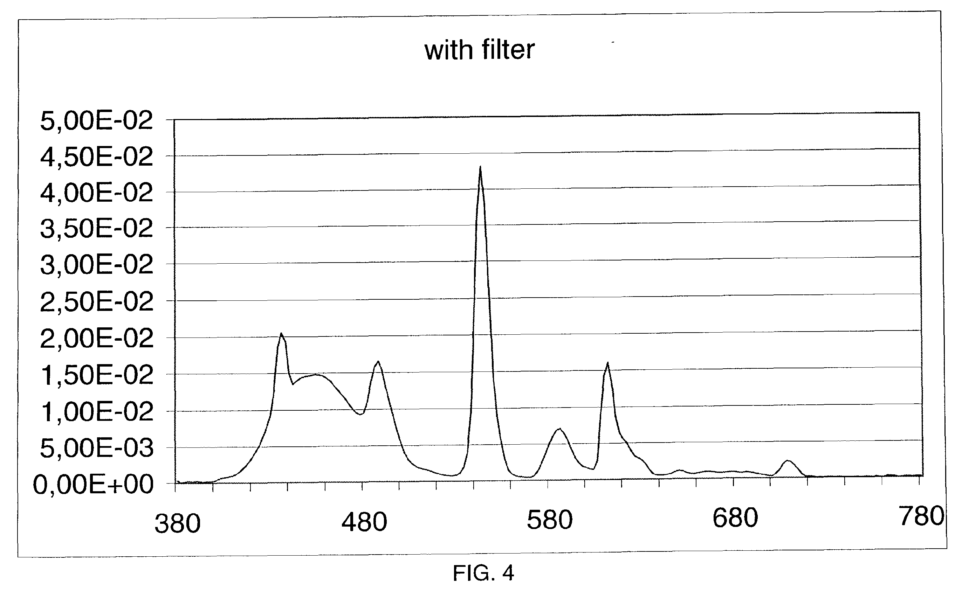

Next a filter having the transmission spectrum shown in figure 3 was placed in front of the viewing screen of a display device. The emission spectrum of the display device was again measured and is shown in figure 4.

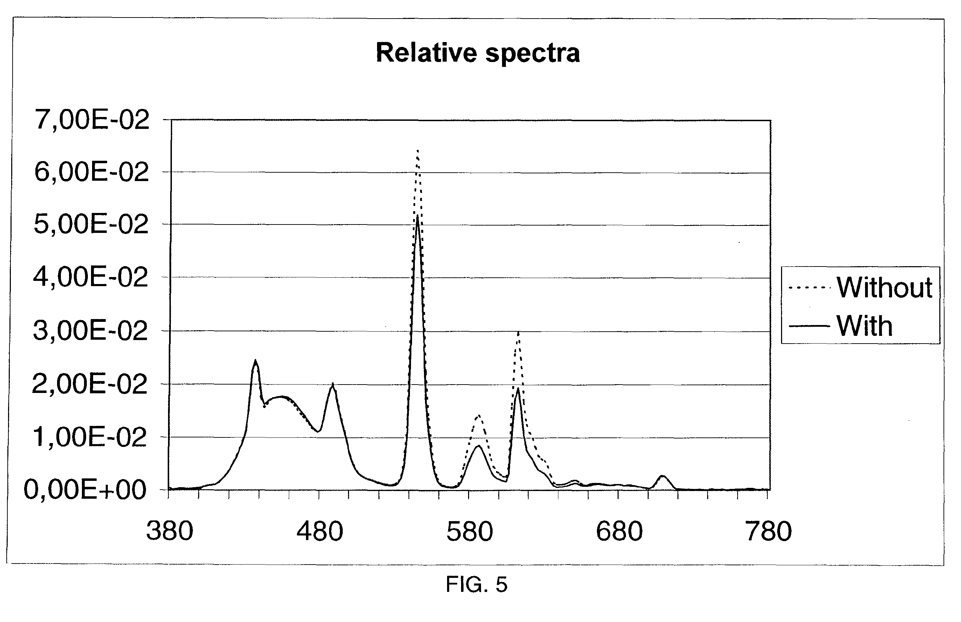

A comparison of both spectra can be made by means of figure 5 showing both spectra on top of eachother. The spectra with and without filter were scaled to eachother so that the blue peaks matched. By doing so, it becomes clear that the range above 520 nm is relatively more reduced than the range lower than 520 nm resulting in a perceived colour shift.

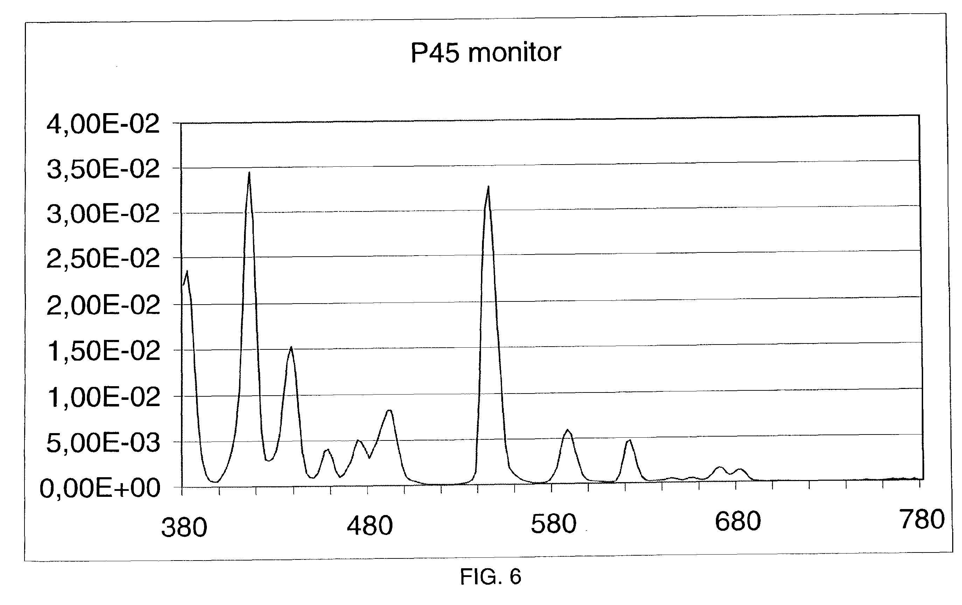

Fig. 6 shows the spectrum of a P45 monitor.

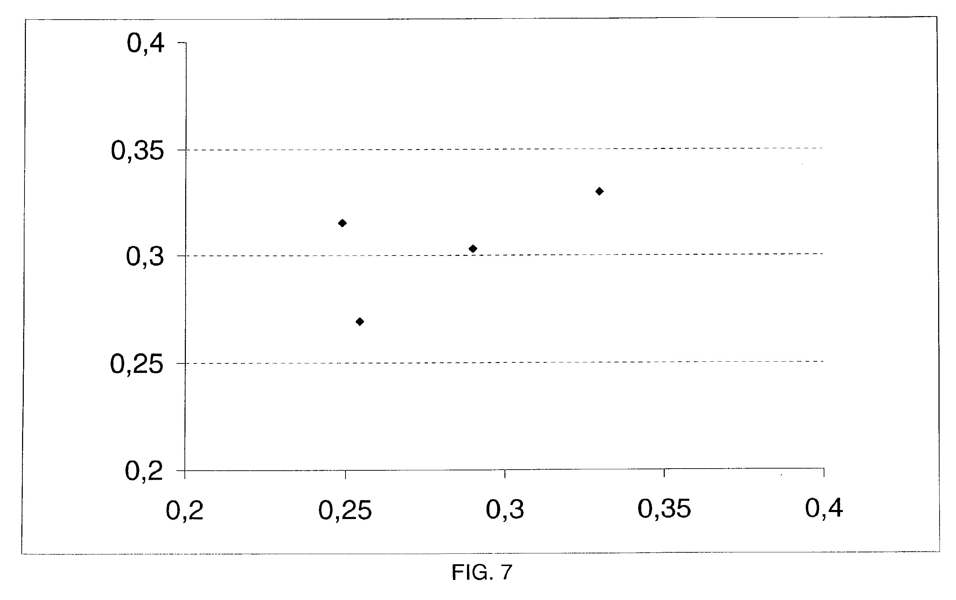

Fig. 7 shows the colour co-ordinates of the following items in a CIE 1931 colour space.

Co-ordinates (0.33,0.33) correspond with neutral white; (0.2901,0.3031) correspond with the LCD display device without additional filter, co-ordinates (0.2545, 0.2693) correspond with the same LCD display device with a filter consisting of a blue base of a photographic film, co-ordinates (0.249, 0.3153) correspond with a P45 phosphor.

The colour co-ordinates of the LCD device with filter are shifted towards the blue colour zone in the CIE 1931 colour space. The colour is now similar to that which the radiologist is used to see.

## Claims

1. A monochrome liquid crystal display device comprising
- a liquid crystal panel comprising a layer (1) of liquid crystals,
- a light source (6) arranged for uniformly illuminating said layer (1) of liquid crystals,
- **characterised in that** a colour filter (8) is provided for changing the spectrum of the light emitted by said liquid crystal panel.

2. A monochrome liquid crystal display device according to claim 1 wherein said colour filter (8) is provided between a light source (6) and a viewer (11).

3. A monochrome liquid crystal display device according to claim 1 wherein said colour filter (8) is provided in front of said liquid crystal panel.

4. A monochrome liquid crystal display device according to claim 1 wherein said colour filter (8) is provided in between said light source (6) and said liquid crystal panel (1-10).

5. A monochrome liquid crystal display device according to claim 1 wherein said colour filter (8) is provided in between a light distributor (7) arranged for uniformly illuminating said liquid crystal panel by means of light emitted by said light source (6), and said panel (1-10).

6. A monochrome liquid crystal display device according to any of the preceding claims wherein said colour filter (8) has a spectrum such that the colour co-ordinates of the light emitted by said liquid crystal display device correspond with the colour co-ordinates of the base of a blue base photographic film.

7. A monochrome display device according to any of the preceding claims wherein said colour filter (8) is the base of a blue base photographic film.
